Europäisches Patentamt

European Patent Office

Office européen des brevets

(11) Veröffentlichungsnummer: **0 338 341**
**A2**

(12) **EUROPÄISCHE PATENTANMELDUNG**

(21) Anmeldenummer: **89106096.4**

(22) Anmeldetag: **07.04.89**

(51) Int. Cl.⁴: **H02B 1/08**

(30) Priorität: **19.04.88 DE 3812970**

(43) Veröffentlichungstag der Anmeldung:
**25.10.89 Patentblatt 89/43**

(84) Benannte Vertragsstaaten:
**AT BE CH DE ES FR GB GR IT LI LU NL SE**

(71) Anmelder: **Rittal-Werk Rudolf Loh GmbH & Co. KG**
**Auf dem Stützelberg**
**D-6348 Herborn(DE)**

(72) Erfinder: **Zachrei, Jürgen**
**Am Hungersberg 2**
**D-6340 Dillenburg-Nanzenbach(DE)**
Erfinder: **Pittner, Stefan**
**Finkenstrasse 2**
**D-6349 Breitscheid(DE)**

(74) Vertreter: **Vogel, Georg**
**Pat.-Ing. Georg Vogel**
**Hermann-Essig-Strasse 35**
**D-7141 Schwieberdingen(DE)**

(54) **Schaltschrank mit Schwenkrahmen.**

㉗ Die Erfindung betrifft einen Schaltschrank mit einem im Schrankinnenraum angeordneten Schwenkrahmen, der aus zwei horizontalen und zwei vertikalen Rahmenschenkeln zusammengesetzt ist, im Bereich des einen die Anlenkseite bestimmenden vertikalen Rahmenschenkel am Schrankkorpus schwenkbar gelagert ist, und im Bereich des anderen, die Schließseite bestimmenden vertikalen Rahmenschenkels mit einer abgekanteten, den Verschluß tragenden Griffleiste verbunden ist. Ein gefahrloses Fassen der Griffleiste am Schwenkrahmen wird dadurch erreicht, daß sich die Griffleiste an die Außenseite des vertikalen Rahmenschenkels anschließt und so abgekantet ist, daß sie etwa in der Ebene der Vorderseite des Schwenkrahmens eine über die gesamte Höhe des Schwenkrahmens durchgehende, vertikale Grifföffnung bildet, die dem Schrankkorpus zugekehrt von einem Griffschenkel begrenzt ist, der in derselben Ebene wie die Grifföffnung angeordnet und in Richtung zum zugekehrten vertikalen Rahmenschenkel des Schwenkrahmens gerichtet ist.

FIG.1

## Schaltschrank mit Schwenkrahmen

Die Erfindung betrifft einen Schaltschrank mit einem im Schrankinnenraum angeordneten Schwenkrahmen, der aus zwei horizontalen und zwei vertikalen Rahmenschenkeln zusammengesetzt ist, im Bereich des einen die Anlenkseite bestimmenden vertikalen Rahmenschenkel am Schrankkorpus schwenkbar gelagert ist, und im Bereich des anderen, die Schließseite bestimmenden vertikalen Rahmenschenkels mit einer abgekanteten, den Verschluß tragenden Griffleiste verbunden ist.

Der der Anlenkseite abgekehrte vertikale Rahmenschenkel des Schwenkrahmens wird in der eingeschwenkten Stellung mittels eines Verschlusses oder dgl. am Schrankkorpus festgelegt, um diese Stellung des Schwenkrahmens zu sichern. Dabei ist zwischen dem Schwenkrahmen und dem Schrankkorpus ein Zwischenraum. Bei dem bekannten Schaltschrank der eingangs erwähnten Art trägt der der Anlenkseite abgekehrte vertikale Rahmenschenkel des Schwenkrahmens auf der dem Schrankkorpus zugekehrten Außenseite eine abgekantete Griffleiste. Diese Griffleiste ist zum Schrankkorpus hin offen, so daß sie nur gefaßt werden kann, wenn zumindest ein ausreichender Zwischenraum zwischen dem Schwenkrahmen und dem Schrankkorpus vorhanden ist. Selbst dann besteht beim Fassen der Griffleiste und Einstellen des Schwenkrahmens in die eingeschwenkte Stellung die Gefahr, daß die die Griffleiste fassenden Finger eingeklemmt werden.

Es ist Aufgabe der Erfindung, bei einem Schaltschrank der eingangs erwähnten Art eine Griffleiste zu schaffen und so anzubringen, daß sie ohne Gefahr des Einklemmens von Fingern gefaßt und der Schwenkrahmen bedient werden kann, wobei der Raum zwischen dem eingeschwenkten Schwenkrahmen und dem Schrankkorpus möglichst klein gehalten werden kann.

Diese Aufgabe wird nach der Erfindung dadurch gelöst, daß sich die Griffleiste an die Außenseite des vertikalen Rahmenschenkels anschließt und so abgekantet ist, daß sie etwa in der Ebene der Vorderseite des Schwenkrahmens eine über die gesamte Höhe des Schwenkrahmens durchgehende, vertikale Grifföffnung bildet, die dem Schrankkorpus zugekehrt von einem Griffschenkel begrenzt ist, der in derselben Ebene wie die Grifföffnung angeordnet und in Richtung zum zugekehrten vertikalen Rahmenschenkel des Schwenkrahmens gerichtet ist.

Der zur Anlenkseite gerichtete Griffschenkel wird durch die vorderseitige Grifföffnung hindurch in Richtung zum Schrankkorpus gefaßt, so daß die den Griffschenkel der Griffleiste passenden Finger gar nicht in den Zwischenraum zwischen dem Schwenkrahmen und dem Schrankkorpus gelangen können. Der Schwenkrahmen kann daher auf der Schließseite unmittelbar an den Schrankkorpus anschließen.

Das Fassen des Griffschenkels wird dadurch noch verbessert, daß die der Grifföffnung zugekehrte freie Kante des Griffschenkels mit einem auf dessen Innenseite abgekanteten Endabschnitt doppellagig ausgebildet ist. Eine Verletzungsgefahr ist durch die dadurch entstehende abgerundete Kante vermieden.

Die Abkantung der Griffleiste ist nach einer Ausgestaltung so ausgeführt, daß der Griffschenkel der Griffleiste über abgekantete Abschnitte, die im rechten Winkel zueinander stehen, und einen geneigten Übergangsabschnitt mit einem ersten Befestigungsabschnitt in Verbindung steht, der etwa in derselben Ebene wie der Griffschenkel selbst liegt und die Grifföffnung auf der gegenüberliegenden Seite begrenzt. Die Ausrichtung der abgekanteten Abschnitte ist dabei vorzugsweise so, daß der erste abgekantete Abschnitt senkrecht zum Griffschenkel steht und zur Rückseite des Schwenkrahmens gerichtet ist, daß sich an den ersten abgekanteten Abschnitt der zweite abgekantete Abschnitt senkrecht und zum Schwenkrahmen gerichtet anschließt, und daß der geneigte Übergangsabschnitt vom zweiten abgekanteten Abschnitt unter Einhaltung der Grifföffnung in den ersten Befestigungsabschnitt übergeht.

Für die Verbindung mit dem vertikalen Rahmenschenkel des Schwenkrahmens ist nach einer weiteren Ausgestaltung vorgesehen, daß sich an den ersten Befestigungsabschnitt senkrecht stehend und zur Rückseite des Schwenkrahmens gerichtet ein zweiter Befestigungsabschnitt anschließt, der mit den Außenseiten des zugekehrten vertikalen Rahmenschenkels und der horizontalen Rahmenschenkel verbunden ist. Ist dabei zusätzlich vorgesehen, daß der erste Befestigungsabschnitt unter Bildung eines doppellagig abgekanteten Anlagesteges über den zweiten Befestigungsabschnitt hinaus verlängert ist und in diesen übergeht, dann läßt sich die Griffleiste in definierter Stellung an den Schwenkrahmen und den vertikalen Rahmenschenkel anlegen und mit diesem verbinden, vorzugsweise verschweißen.

Die Griffleiste läßt sich aus einem verhältnismäßig dünnen Blechzuschnitt abkanten, wenn vorgesehen ist, daß zumindest in dem unteren und oberen Endbereich der Griffleiste plattenförmige Versteifungswinkel angeordnet sind, die mit ihren Außenkanten mit der dem vertikalen Rahmenschenkel abgekehrten Seite des zweiten Befestigungsabschnittes und der der Rückseite des Schwenkrahmens zugekehrten Seite des ersten Befestigungsabschnittes der Griffleiste verbunden sind, um eine ausreichende Stabilität für die Griffleiste zu erhalten.

Damit sich die Versteifungswinkel leicht mit der Griffleiste verbinden lassen, ist weiterhin vorgesehen, daß die Außenkanten und die Innenkanten der Versteifungswinkel mittels senkrecht abgekanteter Ränder versteift sind.

Ist vorgesehen, daß die Versteifungswinkel mit mindestens einem, vorzugsweise im Eckbereich angeordneten Durchbruch versehen sind, dann können durch die Durchbrüche der Versteifungswinkel elektrische Kabel geführt und fixiert werden.

Ein bündiger Abschluß zwischen Griffleiste und Schwenkrahmen wird dadurch erreicht, daß die Versteifungswinkel mit ihren Rändern gegeneinander gerichtet sind und mit der Unter-und Oberseite der horizontalen Rahmenschenkel des Schwenkrahmens bündig abschließen, die die vertikalen Rahmenschenkel des Schwenkrahmens überdecken.

Die Erfindung wird anhand eines in den Zeichnungen dargestellten Ausführungsbeispiels näher erläutert. Es zeigt:

Fig. 1 den Schwenkrahmen mit der Griffleiste in Vorderansicht,

Fig. 2 den Schwenkrahmen bei abgenommenem oberen horizontalen Rahmenschenkel auf die Oberseite gesehen und

Fig. 3 den in Fig. 2 mit III gekennzeichneten Bereich in vergrößerter Darstellung.

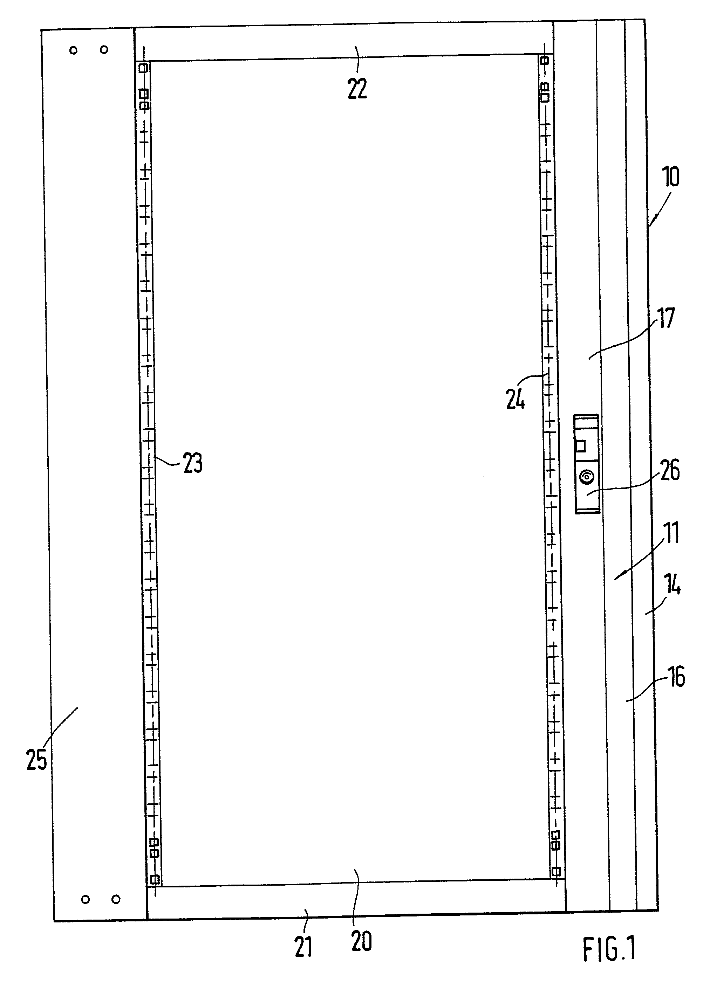

Wie die Fig. 1 zeigt, ist der Schwenkrahmen 20 aus den beiden horizontalen Rahmenschenkeln 21 und 22 und den beiden vertikalen Rahmenschenkeln 23 und 24 zusammengesetzt. Die horizontalen Rahmenschenkel 21 und 22 überdecken die vertikalen Rahmenschenkel 23 und 24, die z.B. als Profilabschnitte mit Reihen von Durchbrüchen und/oder Bohrungen ausgebildet sein können. Der vertikale Rahmenschenkel 23 ist der Anlenkseite zugekehrt, die mit der Blende 25 verbunden ist, die die Scharniere abdecken, welche den Schwenkrahmen 20 mit dem nicht dargestellten Schrankkorpus des Schaltschrankes verschwenkbar verbinden.

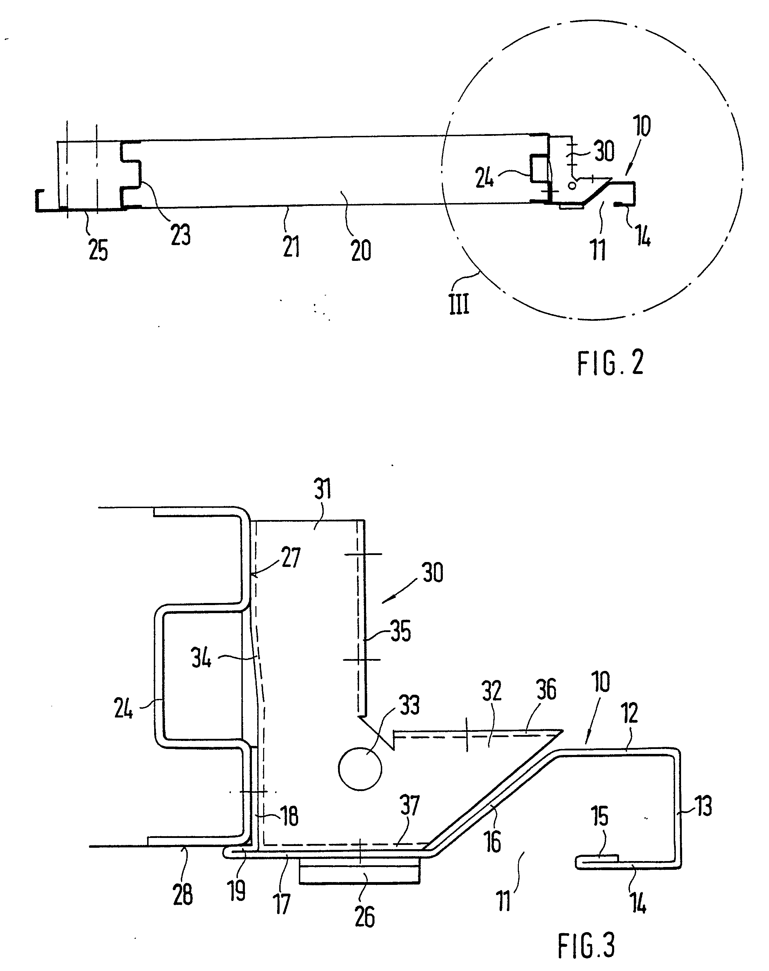

Der vertikale Rahmenschenkel 24 und die Stirnseiten der horizontalen Rahmenschenkel 21 und 22 sind auf der Schließseite des Schwenkrahmens 20 mit der Griffleiste 10 verbunden, die sich an die Außenseite des vertikalen Rahmenschenkels 24 anschließt. Die Griffleiste 10 ist abgekantet und bildet eine über die gesamte Höhe des Schwenkrahmens 20 reichende Grifföffnung 11, die wie die Draufsicht nach Fig. 2 zeigt, in der Ebene der Vorderseite des Schwenkrahmens 20 liegt und zum Schrankkorpus hin durch den Griffschenkel 14 abgeschlossen ist. Die Griffleiste 10 trägt den Verschluß 26. Die vertikalen Rahmenschenkel 23 und 24 sind ebenfalls abgekantet, wie Fig. 3 zeigt.

Die abgekantete Griffleiste 10 ist aus einem Blechzuschnitt abgekantet und schließt sich an die Außenseite 27 des vertikalen Rahmenschenkels 24 und die Stirnseiten der horizontalen Rahmenschenkel 21 und 22 an. Die Verbindung erfolgt über den zweiten Befestigungsabschnitt 18, der senkrecht an dem ersten Befestigungsabschnitt 17 absteht. Der Übergang erfolgt über den abgekanteten doppellagigen Anlagesteg 19, der am zweiten Befestigungsabschnitt 18 absteht und an der Vorderseite 28 des vertikalen Rahmenschenkels 24 anliegt, d.h. das Anlegen an den vertikalen Rahmenschenkel 24 erleichtert. Die Verbindung kann mittels Schraub-oder Schweißverbindungen erfolgen. Der erste Befestigungsabschnitt 17 verläuft dann etwa in der Ebene der Vorderseite des Schwenkrahmens 20 und trägt den Verschluß 26. Der erste Befestigungsabschnitt 17 geht in den geneigten Übergangsabschnitt 16 über, der die Grifföffnung 11 nach hinten abschließt. Der Übergangsabschnitt 16 ist zur Rückseite des Schwenkrahmens 20 hin geneigt und geht in den zweiten abgekanteten Abschnitt 12 über, der parallel zum Griffschenkel 14 verläuft. Der sich anschließende erste abgekantete Abschnitt 13 verbindet den Griffschenkel 14 mit dem zweiten abgekanteten Abschnitt 12 und steht senkrecht zu den beiden abgekanteten Abschnitten 12 und 13. Die der Grifföffnung 11 zugekehrte Kante des Griffschenkels 14 ist dopellagig ausgebildet und daher abgerundet, wobei der Endabschnitt 15 auf die Innenseite des Griffschenkels 14 abgekantet ist. An den ersten abgekanteten Abschnitt 13 kann sich unmittelbar der Schrankkorpus anschließen, da die Griffleiste 10 über den Griffschenkel 14 gefahrlos von dem Schwenkrahmen 20 aus in Richtung zum Schrankkorpus gefaßt werden kann.

Zur Versteifung der Griffleiste 10 werden Versteifungswinkel 30 verwendet, die zumindest mit den Enden der Griffleiste 10 verbunden sind. Dabei sind die Außenkanten und die Innenkanten der Schenkel 31 und 32 des Versteifungswinkels 30 abgekantet, wie die Ränder 34, 35, 36 und 37 zeigen. Die Ränder 34 sind mit der dem vertikalen Rahmenschenkel 24 abgekehrten Seite des zweiten und den zugekehrten Stirnseiten der horizontalen Rahmenschenkel 21 und 22 verbunden. Die Ränder 37 werden mit den zur Rückseite des Schwenkrahmens 20 gerichteten Seiten des ersten Befestigungsabschnittes 17 verbunden, vorzugsweise verschweißt. Die Ränder 35 und 36 dienen zur Versteifung der Versteifungswinkel 30. Die Anbringung der Versteifungswinkel 30 an den Enden der Griffleiste 10 kann dabei so erfolgen, daß die Schenkel 31 und 32 der Versteifungswinkel 30 bündig mit der Unter- bzw. Oberseite der horizontalen Rahmenschenkel 21 bzw. 22 abschließen. Dabei sind die Ränder 34, 35, 36 und 37 der beiden Versteifungswinkel 30 gegeneinander gerichtet.

**Ansprüche**

1. Schaltschrank mit einem im Schrankinnenraum angeordneten Schwenkrahmen, der aus zwei horizontalen und zwei vertikalen Rahmenschenkeln zusammengesetzt ist, im Bereich des einen die Anlenkseite bestimmenden vertikalen Rahmenschenkel am Schrankkorpus schwenkbar gelagert ist, und im Bereich des anderen, die Schließseite bestimmenden vertikalen Rahmenschenkels mit einer abgekanteten, den Verschluß tragenden Griffleiste verbunden ist,
dadurch gekennzeichnet,
daß sich die Griffleiste (10) an die Außenseite (27) des vertikalen Rahmenschenkels (24) anschließt und so abgekantet ist, daß sie etwa in der Ebene der Vorderseite des Schwenkrahmens (20) eine über die gesamte Höhe des Schwenkrahmens (20) durchgehende, vertikale Grifföffnung (11) bildet, die dem Schrankkorpus zugekehrt von einem Griffschenkel (14) begrenzt ist, der in derselben Ebene wie die Grifföffnung (11) angeordnet und in Richtung zum zugekehrten vertikalen Rahmenschenkel (24) des Schwenkrahmens (20) gerichtet ist.

2. Schaltschrank nach Anspruch 1,
dadurch gekennzeichnet,
daß die der Grifföffnung (11) zugekehrte freie Kante des Griffschenkels (14) mit einem auf dessen Innenseite abgekanteten Endabschnitt (15) doppellagig ausgebildet ist.

3. Schaltschrank nach Anspruch 1 oder 2,
dadurch gekennzeichnet,
daß der Griffschenkel (14) der Griffleiste (10) über abgekantete Abschnitte (12,13), die im rechten Winkel zueinander stehen, und einen geneigten Übergangsabschnitt (16) mit einem ersten Befestigungsabschnitt (17) in Verbindung steht, der etwa in derselben Ebene wie der Griffschenkel (14) selbst liegt und die Grifföffnung (11) auf der gegenüberliegenden Seite begrenzt.

4. Schaltschrank nach Anspruch 3,
dadurch gekennzeichnet,
daß der erste abgekantete Abschnitt (13) senkrecht zum Griffschenkel (14) steht und zur Rückseite des Schwenkrahmens (20) gerichtet ist,
daß sich an den ersten abgekanteten Abschnitt (13) der zweite abgekantete Abschnitt (12) senkrecht und zum Schwenkrahmen (20) gerichtet anschließt, und
daß der geneigte Übergangsabschnitt (16) vom zweiten abgekanteten Abschnitt (12) unter Einhaltung der Grifföffnung (11) in den ersten Befestigungsabschnitt (17) übergeht.

5. Schaltschrank nach Anspruch 4,
dadurch gekennzeichnet,
daß sich an den ersten Befestigungsabschnitt (17) senkrecht stehend und zur Rückseite des Schwenkrahmens (20) gerichtet ein zweiter Befestigungsabschnitt (18) anschließt, der mit den Außenseiten (27) des zugekehrten vertikalen Rahmenschenkels (24) und der horizontalen Rahmenschenkel (21,22) verbunden ist.

6. Schaltschrank nach Anspruch 5,
dadurch gekennzeichnet,
daß der erste Befestigungsabschnitt (17) unter Bildung eines doppellagig abgekanteten Anlagesteges (19) über den zweiten Befestigungsabschnitt (18) hinaus verlängert ist und in diesen übergeht.

7. Schaltschrank nach einem der Ansprüche 1 bis 6,
dadurch gekennzeichnet,
daß zumindest in dem unteren und oberen Endbereich der Griffleiste (10) plattenförmige Versteifungswinkel (30) angeordnet sind, die mit ihren Außenkanten mit der dem vertikalen Rahmenschenkel (24) abgekehrten Seite des zweiten Befestigungsabschnittes (18) und der der Rückseite des Schwenkrahmens (20) zugekehrten Seite des ersten Befestigungsabschnittes (17) der Griffleiste (10) verbunden sind.

8. Schaltschrank nach Anspruch 7,
dadurch gekennzeichnet,
daß die Außenkanten und die Innenkanten der Versteifungswinkel (30) mittels senkrecht abgekanteter Ränder (34,35, 36,37) versteift sind.

9. Schaltschrank nach Anspruch 7 oder 8,
dadurch gekennzeichnet,
daß die Versteifungswinkel (30) mit mindestens einem, vorzugsweise im Eckbereich angeordneten Durchbruch (33) versehen sind.

10. Schaltschrank nach einem der Ansprüche 7 bis 9,
dadurch gekennzeichnet,
daß die Versteifungswinkel (20) mit ihren Rändern (34,35, 36,37) gegeneinander gerichtet sind und mit der Unter-und Oberseite der horizontalen Rahmenschenkel (21,22) des Schwenkrahmens (20) bündig abschließen, die die vertikalen Rahmenschenkel (23,24) des Schwenkrahmens (20) überdecken.

4

FIG.1

FIG. 2

FIG. 3